# EUROPÄISCHE PATENTSCHRIFT

(11) **EP 2 477 450 B1**
(45) Veröffentlichungstag und Bekanntmachung des Hinweises auf die Patenterteilung: **31.10.2018**
(21) Anmeldenummer: 12150221.5
(22) Anmeldetag: 05.01.2012
(51) Int. Cl.: H04W 76/25, H04W 64/00, H04W 60/00

(54) **Verfahren und Vorrichtung zum vom Besitzer unbemerkten Aktivieren eines UMTS/LTE-Mobiltelefons**
Method and device for activating a UMTS/LTE mobile phone without the user noticing
Procédé et dispositif d'activation d'un téléphone mobile UMTS/LTE sans intervention de l'utilisateur

(30) Priorität: 17.01.2011 DE 102011008733; 04.02.2011 DE 102011010354; 11.03.2011 DE 102011005413
(43) Veröffentlichungstag der Anmeldung: 18.07.2012
(73) Patentinhaber: Rohde & Schwarz GmbH & Co. KG, 81671 München (DE)
(72) Erfinder: Schachinger, Jürgen, 83026 Rosenheim (DE); Frick, Joachim, 82152 Planegg (DE)
(74) Vertreter: Körfer, Thomas

(56) Entgegenhaltungen:
- WO-A2-00/30277
- DE-A1- 10 051 129
- US-A1- 2008 214 212
- "3rd Generation Partnership Project; Technical Specification Group Core Network and Terminals; Mobile radio interface Layer 3 specification; Core network protocols; Stage 3 (Release 8)", 3GPP STANDARD; 3GPP TS 24.008, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V8.12.0, 19. Dezember 2010 (2010-12-19), Seiten 1-593, XP050462275, [gefunden am 2010-12-19]

## Beschreibung

Die Erfindung betrifft ein Verfahren und eine Vorrichtung zum vom Besitzer unbemerkten Aktivieren eines Mobiltelefons, insbesondere eines UMTS-Mobiltelefons oder LTE-Mobiltelefons.

Bei modernen öffentlichen digitalen Mobilfunknetzen besteht oftmals ein öffentliches Interesse, die genaue Position eines Mobiltelefons zu ermitteln, ohne dass der Nutzer des Mobiltelefons dies bemerkt. Aus der DE 100 51 129 A1 ist schon ein Verfahren zum vom Besitzer unbemerkten Aktivieren eines GSM-Mobiltelefons bekannt. Dabei wird die Mobilstation durch eine Basisstation kontaktiert. Noch bevor die Mobilstation einen ankommenden Anruf signalisiert, wird die Verbindung durch die Basisstation erneut unterbrochen. Dieses Verfahren ist insofern nachteilhaft, als es bei modernen digitalen Mobilfunknetzen wie UMTS und LTE nicht einsetzbar ist.

Das Dokument US 2008/0214212 A1 zeigt ein Verfahren zum vom Benutzer unbemerkten Aktivieren eines Mobiltelefons.

Der Erfindung liegt die Aufgabe zugrunde, ein Verfahren und eine Anordnung zu schaffen, welche auch bei modernen digitalen Mobilfunknetzen wie z.B. UMTS oder LTE eine vom Nutzer unbemerkte Aktivierung eines Mobiltelefons ermöglichen.

Die Aufgabe wird erfindungsgemäß die Vorrichtung durch die Merkmale des unabhängigen Anspruchs 1 und für das Verfahren durch die Merkmale des unabhängigen Anspruchs 10 gelöst. Vorteilhafte Weiterbildungen sind Gegenstand der hierauf rückbezogenen Unteransprüche.

Bei einem erfindungsgemäßen Verfahren zum Anregen einer Mobilstation zum wiederholten Senden von Nachrichten an eine Basisstation in einem öffentlichen Mobilfunknetz wird bei einem für den Benutzer der Mobilstation nicht bemerkbaren Anruf eine Verbindung zwischen der Mobilstation und der Basisstation aufgebaut. Nach Initiierung der Verbindung und dem Senden einer Positionsaktualisierungsanfrage von der Mobilstation an die Basisstation wird der Abbau der Verbindung möglichst lange verzögert, indem bevor mit dem Aussenden einer Positionsaktualisierungsablehnung oder einer Positionsaktualisierungsannahme durch die Basisstation geantwortet wird, wiederholt Authentisierungsanfragen von der Basisstation an die Mobilstation gesendet werden. Von der Basisstation wird die Gerätekennung der Mobilstation abgerufen. Aus der Gerätekennung der Mobilstation wird der Gerätetyp der Mobilstation mittels einer Datenbank ermittelt. Die Anzahl der Wiederholungen wird dabei in Abhängigkeit vom Gerätetyp bestimmt.

Es ist so mit sehr einfachen Mitteln möglich, eine Mobilstation unbemerkt zum Senden zu bewegen.

Nachfolgend wird die Erfindung anhand der Zeichnung, in der ein vorteilhaftes Ausführungsbeispiel der Erfindung dargestellt ist, beispielhaft beschrieben. In der Zeichnung zeigen:
- Fig. 1: ein Ausführungsbeispiel der erfindungsgemäßen Anordnung;
- Fig. 2: ein erstes Ausführungsbeispiel des erfindungsgemäßen Verfahrens;
- Fig. 3: ein zweites Ausführungsbeispiel des erfindungsgemäßen Verfahrens;
- Fig. 4: ein drittes Ausführungsbeispiel des erfindungsgemäßen Verfahrens, und
- Fig. 5: ein viertes Ausführungsbeispiel des erfindungsgemäßen Verfahrens.

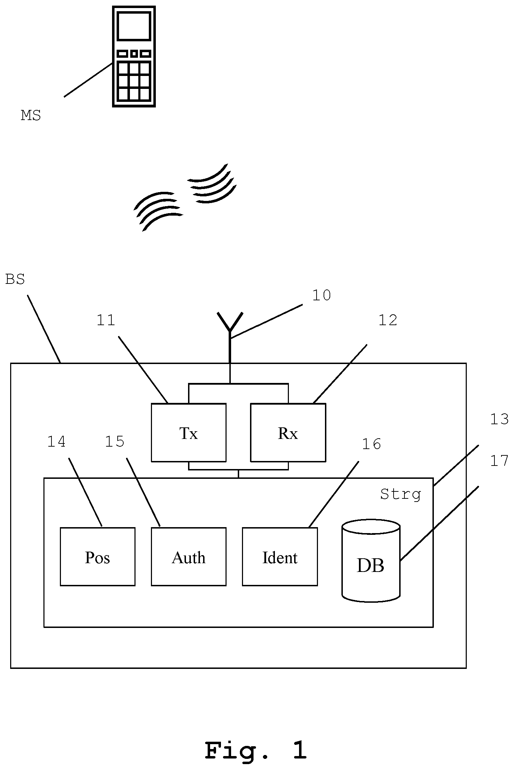

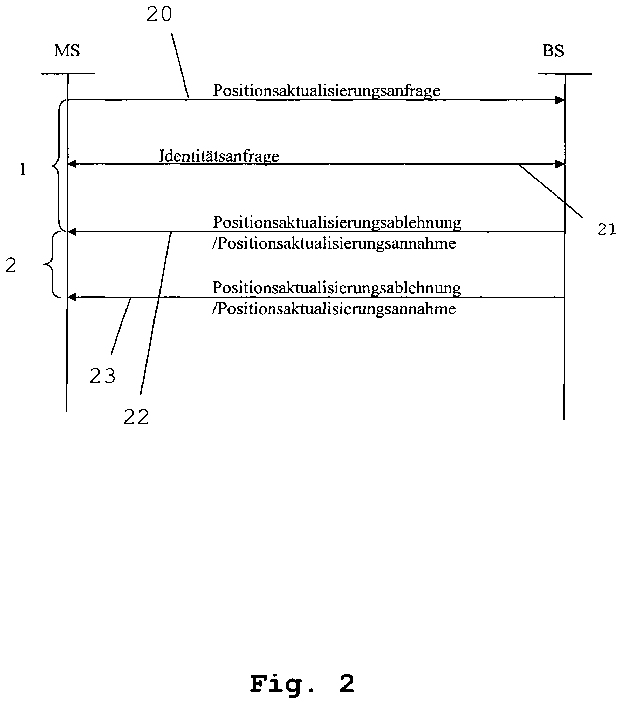

Zunächst wird anhand der Fig. 1 der Aufbau und die allgemeine Funktionsweise der erfindungsgemäßen Anordnung erläutert. Anschließend wird mittels Fig. 2-5 die Funktionsweise verschiedener Ausführungsbeispiele des erfindungsgemäßen Verfahrens näher veranschaulicht. Identische Elemente werden in ähnlichen Abbildungen z.T. nicht wiederholt dargestellt und beschrieben.

Bei einem sogenannten Silent-Call (unbemerkter Ruf) wird ein Mobiltelefon zum kontinuierlichen Senden eines Hochfrequenz-Signals angeregt, um es mit Hilfe von Peilmessungen zu orten. Dabei wird eine Ruf-Signalisierung durch das Mobiltelefon vermieden. Bei UMTS wird beispielsweise nach Initiierung des RRC-Verbindungsaufbaus und Senden der Positionsaktualisierungsanfrage (Location-Update-Request) durch das Mobiltelefon der Abbau der Verbindung möglichst lange verzögert. Dies geschieht durch wiederholtes Senden von Identitätsanfragen (Identity-Request), welche vom Mobiltelefon in jedem Fall beantwortet werden müssen.

Mangels Kenntnis der geheimen Schlüssel für Authentisierung und Verschlüsselung, kann die Positionsaktualisierungs-Prozedur (Location-Update) in UMTS-3G nicht fehlerfrei, d.h. mit einer Positionsaktualisierungsannahme (Location-Update-Accept) abgeschlossen werden. Weiterhin ist die Positionsaktualisierungs-Prozedur (Location-Update) gemäß 3GPP TS 24.008 mit einem Zähler (Timeout-Timer) T3210 abgesichert. Nach Ablauf dieser Zeitspanne sollen Mobiltelefone gemäß dem 3GPP TS 24.008, Kapitel 4.4.9 die RRC-Verbindung abbauen. Eine Vielzahl von Mobiltelefonen hält sich jedoch nicht exakt an diese Vorgabe. Ein Verbindungsabbau findet dann nicht statt. Manche Chipsatzhersteller halten sich jedoch exakt an diese Vorgabe. Es sind deshalb für Mobiltelefone mit diesen Chipsätzen nach einem beispielhaften Verfahren lediglich Aktivierungen des Mobiltelefons ohne eine Benachrichtigung des Benutzers mit einer Höchstdauer von 20 Sekunden, welche dem Zähler (Timeout-Timer) T3210 entspricht, möglich.

Gezeigt werden im Folgenden ein System und ein Signalisierungsablauf, welche es ermöglichen, die unabhängig vom Chipsatz auf mindestens knapp eine Minute zu verlängern.

In Fig. 1 ist ein Ausführungsbeispiel der erfindungsgemäßen Anordnung abgebildet. Eine Basisstation BS verfügt über eine Antenne 10, eine Sendeeinheit 11, eine Empfangseinheit 12 und eine Verarbeitungseinrichtung 13. Die Antenne 10 ist dabei mit der Sendeeinheit 11 und der Empfangseinheit 12 verbunden. Die Sendeeinheit 11 und die Empfangseinheit 12 wiederum sind mit der Verarbeitungseinrichtung 13 verbunden. Mittels der Antenne 10 ist die Basisstation BS mit der zu überwachenden Mobilstation MS über die Luftschnittstelle verbunden. Die Verarbeitungseinrichtung 13 beinhaltet dabei unter anderem eine Positionsaktualisierungseinheit 14, eine Authentisierungseinheit 15, eine Identitätsfeststellungseinheit 16 und eine Datenbank 17.

Die Positionsaktualisierungseinheit 14 ist dabei für eine Positionsaktualisierungs-Prozedur zuständig. Die Authentisierungseinheit 15 ist dabei für eine Authentisierungs-Prozedur zuständig. Die Identitätsfeststellungseinheit 16 ist dabei für eine Identitätsfeststellungs-Prozedur zuständig. Die Datenbank 17 hält eine Vielzahl von Gerätekennungen IMEI und/oder Teilnehmer-Nummern IMSI bereit.

Die Basisstation BS sendet eine Reihe von Nachrichten an die Mobilstation MS und empfängt eine Reihe von Nachrichten von dieser. Hierzu bestimmt die Verarbeitungseinrichtung 13, welche Nachricht gesendet werden soll, und veranlasst die Sendeeinheit 11, die Nachricht mittels der Antenne 10 auszusenden. Im Empfangsfall wird eine Nachricht von der Empfangseinheit 12 empfangen, decodiert und an die Verarbeitungseinrichtung 13 weitergeleitet. Die Verarbeitungseinrichtung 13 steuert die gesamte Kommunikation der Basisstation BS. Auf die genaue Signalisierung durch die Basisstation BS und die Mobilstation MS wird anhand der folgenden Figuren eingegangen.

Fig. 2 zeigt einen ersten Signalisierungsablauf, welcher einem ersten Ausführungsbeispiel des erfindungsgemäßen Verfahrens entspricht. Insbesondere, wenn es sich bei der Mobilstation MS um ein Mobiltelefon, nach 3GPP-Release 4 mit eingesetzter USIM-Karte oder ein Mobiltelefon nach Release 5 mit eingesetzter GSM-SIM-Karte handelt, wird eine einfache Signalisierung gewählt. In beiden Fällen scheitert ein möglicher Weg über eine Authentisierung. Im ersten Fall, weil im Release 4 nicht genau spezifiziert ist, was in diesem Fall zu tun ist (Release 4 bricht die Verbindung ab). Im zweiten Fall, weil die Authentisierung gelingt und die Mobilstation die Basisstation akzeptiert und entsprechend kein Authentisierungsfehler entsteht. Der Zähler T3214 wird dann nicht gestartet und man hat bzgl. der Zeitdauer des Silent-Call keinen Gewinn.

Die Mobilstation MS sendet eine Positionsaktualisierungsanfrage 20 (Location-Update-Request) an die Basisstation BS. Dies geschieht im Rahmen einer Positionsaktualisierungs-Prozedur. Die Basisstation BS antwortet auf diese Nachricht möglichst spät, jedoch vor Ablauf einer Zeitspanne 1, welche dem Zähler T3210 nach UMTS-Standard entspricht, mit einer Positionsaktualisierungsablehnung (Location-Update-Reject) oder einer Positionsaktualisierungsannahme (Location-Update-Accept) 22. Handelt es sich bei der Nachricht um eine Positionsaktualisierungsannahme 22, ist diese fehlerhaft, da wie bereits beschrieben die für eine korrekte Authentisierung notwendigen Schlüssel nicht zur Verfügung stehen.

Um die Verbindung mit der Mobilstation MS weiter aufrechtzuerhalten, wird noch vor Ablauf einer Zeitspanne 2 erneut durch die Basisstation BS eine Positionsaktualisierungsablehnung oder eine Positionsaktualisierungsannahme 23 an die Mobilstation MS gesendet. Der Empfang einer solchen Nachricht durch die Mobilstation MS setzt die Zeitspanne 2 zurück. Die Mobilstation MS kann somit durch wiederholtes Senden dieser Nachrichten aktiv gehalten werden.

Durch Einfügen einer Identitätsanfrage 21 nach der Positionsaktualisierungsanfrage 20 wird die Identität der verbundenen Mobilstation MS ermittelt und darüber hinaus die Mobilstation MS dazu veranlasst, dauerhaft zu senden. Dies geschieht im Rahmen einer Identitätsfeststellungs-Prozedur, auf welche bereits anhand von Fig. 1 eingegangen wurde. Eine solche Prozedur ist jedoch lediglich einmal für eine verbundene Mobilstation notwendig, da die Identität der Mobilstation unveränderlich ist. Eine solche Identitätsanfrage 21 kann ebenfalls zwischen den Nachrichten 22 und 23 eingefügt werden, falls die Mobilstation keinen ausreichend konstanten Sendepegel liefert. Die in Fig. 2 gezeigte Signalisierungsabfolge arbeitet jedoch nicht zuverlässig bei sämtlichen verfügbaren Chipsätzen.

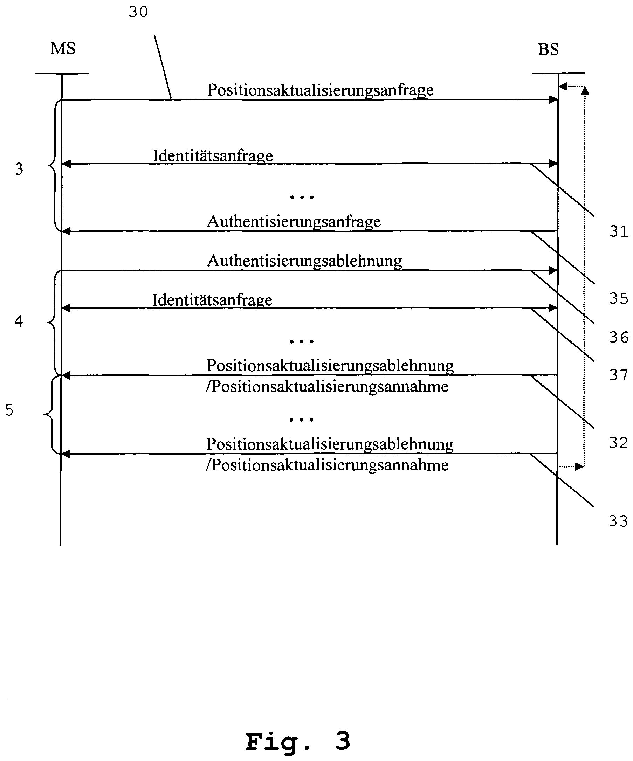

In Fig. 3 wird ein weiterer Signalisierungsablauf, welcher einem zweiten Ausführungsbeispiel des erfindungsgemäßen Verfahrens entspricht, dargestellt. Nach dem Empfang einer Positionsaktualisierungsanfrage 30 der Mobilstation MS durch die Basisstation BS sendet diese kurz vor Ablauf einer ersten Zeitspanne 3, welche dem Zähler T3210 entspricht, eine Authentisierungsanfrage (Authentication Request) 35 aus. Dies geschieht im Rahmen einer Authentisierungs-Prozedur, auf welche bereits zu Fig. 1 eingegangen wurde. Der Zähler T3210 wird hierdurch angehalten. Die Mobilstation MS verarbeitet die Authentisierungsanfrage 35 und gibt eine Authentisierungsablehnung (Authentication Failure) 36 an die Basisstation BS zurück, da die notwendigen Schlüssel für eine erfolgreiche Authentisierung nicht vorliegen.

Mit dem Aussenden der Authentisierungsablehnung 36 wird eine weitere Zeitspanne 4, welche dem Zähler T3214 laut UMTS-Standard entspricht, gestartet. Kurz vor Ablauf dieser Zeitspanne 4 sendet die Basisstation BS eine Positionsaktualisierungsablehnung (Location Update Reject) bzw. Positionsaktualisierungsannahme (Location Update Accept) 32 an die Mobilstation MS. Hierdurch wird der Zähler T3214, welcher der Zeitspanne 4 entspricht, angehalten. Gleichzeitig wird eine Zeitspanne 5, welche der Zeitspanne 2 auf Fig. 2 entspricht, gestartet. Vor Ablauf dieser Zeitspanne 5 wird erneut von der Basisstation BS an die Mobilstation MS eine Positionsaktualisierungsablehnung bzw. Positionsaktualisierungsannahme 33 gesendet.

Wie schon zu Fig. 2 erläutert, wird mittels der Identitätsanfragen 31 und 37 die Identität der Mobilstation MS ermittelt. Außerdem können diese zu einer Aufrechterhaltung eines möglichst konstanten Sendepegels beitragen.

Alternativ zu einer Aussendung der Positionsaktualisierungsablehnung bzw. Positionsaktualisierungsannahme 32 kann erneut ein Authentisierungs-Zyklus gestartet werden. Hierzu wird erneut eine Authentisierungsanfrage, welche der Authentisierungsanfrage 35 entspricht, von der Basisstation BS an die Mobilstation MS gesendet. Hierdurch wird erneut eine Zeitspanne 4 gestartet. Kurz vor Ablauf dieser Zeitspanne 4 wird erst die Positionsaktualisierungsablehnung bzw. Positionsaktualisierungsannahme 32 gesendet. Durch dieses Vorgehen kann der Silent-Call weiter verlängert werden. Dieses Vorgehen kann jedoch bei den meisten Chipsätzen nicht ein drittes Mal ausgeführt werden, da die Mobilstation MS die Basisstation BS dann als ungültige Basisstation ("False Base Station") klassifizieren würde und jeglichen weiteren Kontakt unterbinden würde. Selbiges gilt ebenfalls für einen Ablauf der Zeitspanne 4. Ein rechtzeitiges Senden der Positionsaktualisierungsablehnung bzw. Positionsaktualisierungsannahme 32 verhindert beide Probleme.

Am Ende einer Positionsaktualisierungsprozedur erhöht die Mobilstation MS einen Versuchszähler (Attempt Counter) und startet nach einer gewissen Zeit eine neue Positionsaktualisierungsprozedur. Durch fortwährendes wiederholtes Senden von weiteren Signalisierungsnachrichten, z.B. Positionsaktualisierungsablehnungsnachrichten, kann die noch bestehende Verbindung aufrechterhalten werden. Die Mobilstation MS verwendet dann diese Verbindung, um eine erneute Positionsaktualisierungsanfrage zu senden, und es ergibt sich ein unterbrechungsfreier Übergang in einen neuen Zyklus. Die Anzahl der Positionsaktualisierungsversuche ist jedoch über den Versuch-Zähler auf den Wert 4 beschränkt. Wird über den Wert von 4 hinausgegangen, so wird die Basisstation wiederum als ungültige Basisstation ("False Base Station") klassifiziert. Eine erneute Kontaktierung der Mobilstation MS durch diese Basisstation BS wird durch die Mobilstation MS verweigert.

Um die Aktivierung der Mobilstation MS nach einer Positionsaktualisierungsablehnung 33 weiter zu verlängern, gibt die Basisstation BS in einer Verbindungsabbruchnachricht (RRC-Connection-Release), welche in Fig. 3 nicht dargestellt ist, als Grund (Cause) den Wert "Directed Signaling Connection Re-Establishment" an. Auch andere Gründe können hier eingesetzt werden. Die Mobilstation MS wechselt daraufhin in den Zustand PMM-IDLE laut UMTS-Standard, um dann sofort einen Routing-Area-Update auszuführen (TS 24.008, Kapitel 4.7.2.5). Durch Wiederholen der genannten Schritte ist hiermit eine Endlosschleife möglich. Die Mobilstation MS kontaktiert erneut die Basisstation BS und das anhand von Fig. 3 beschriebene Verfahren kann wiederholt werden. Allerdings geht mit dem Zustandswechsel in den Zustand PMM-IDLE und dem Abbau der RRC-Verbindung hier auch eine Unterbrechung des Hochfrequenz-Pegels einher.

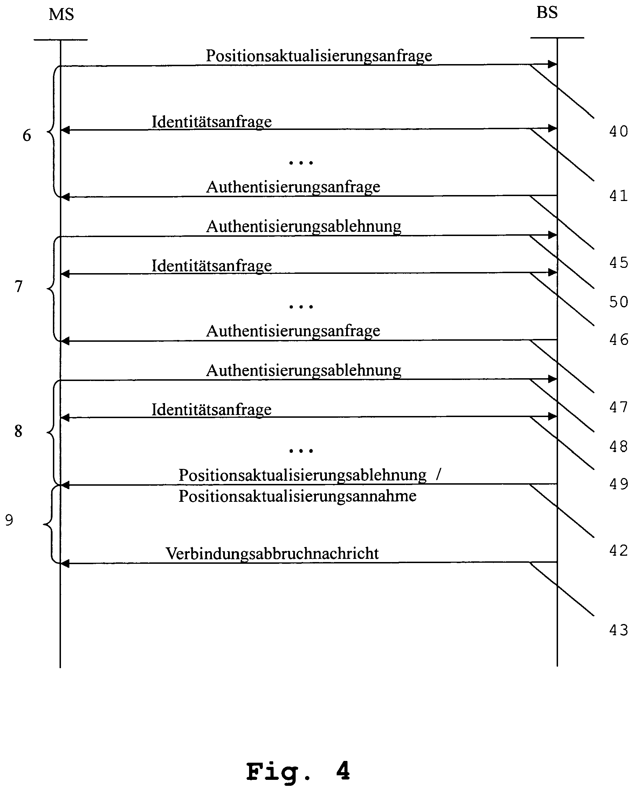

Die anhand von Fig. 2 und Fig. 3 erläuterte Erfindung kann ebenfalls beim LTE-Standard eingesetzt werden. Anhand von Fig. 4 wird im Folgenden ein Signalisierungsablauf bei LTE, welcher einem dritten Ausführungsbeispiel des erfindungsgemäßen Verfahrens entspricht, beschrieben.

Zunächst meldet sich die Mobilstation MS mit einer Positionsaktualisierungsanfrage (Tracking Area Update Request) 40 bei der Basisstation BS. Durch diesen Vorgang wird gleichzeitig eine Zeitspanne 6, welche dem Zähler T3430 lauf LTE-Standard entspricht, gestartet. Kurz vor Ablauf dieser Zeitspanne 6 sendet die Basisstation BS eine Authentisierungsanfrage (Authentication Request) 45 an die Mobilstation MS. Hierdurch wird der Ablauf der Zeitspanne 6 verhindert.

Die Mobilstation MS verarbeitet die Authentisierungsanfrage 45 und sendet daraufhin eine Authentisierungsablehnung 50 an die Basisstation BS, da korrekte Schlüssel für eine erfolgreiche Authentisierung bei der Basisstation BS nicht zur Verfügung stehen. Gleichzeitig startet die Mobilstation MS eine Zeitspanne 7, welche einem Zähler T3418 laut LTE-Standard entspricht. Kurz vor Ablauf dieser Zeitspanne 7 sendet die Basisstation BS erneut eine Authentisierungsanfrage 47 an die Mobilstation MS. Diese wertet die Anfrage erneut aus und sendet erneut eine Authentisierungsablehnung 48. Dadurch wird erneut eine Zeitspanne 8, welche identisch zu der Zeitspanne 7 ist, gestartet. Erneut kurz vor Ablauf diese Zeitspanne 8 sendet die Basisstation BS eine Positionsaktualisierungsablehnung (Tracking Area Update Reject) bzw. Positionsaktualisierungsannahme (Tracking Area Update Accept) 42 an die Mobilstation MS. Hierdurch wird der Ablauf der Zeitspanne 8 verhindert. Eine dritte Authentisierungsnachricht könnte stattdessen nicht gesendet werden, da die Mobilstation MS im Fall einer dritten fehlerhaften Authentisierungsnachricht der Basisstation als ungültiges Netzwerk "False Network" klassifizieren würde und jeglichen weiteren Kontakt mit dieser unterbinden würde.

Selbiges würde auch bei einem Ablauf der Zeitspanne 7 gelten. Nach dem Aussenden der Positionsaktualierungsablehnung bzw. Positionsaktualisierungsannahme 42 startet die Mobilstation MS eine weitere Zeitspanne 9. Vor Ablauf dieser Zeitspanne sendet die Basisstation BS eine Verbindungsabbruchnachricht (RRC-Connection Release) 43 an die Mobilstation MS. Teil dieser Nachricht ist der Beendungsgrund "Load Balancing TAU Required". Dies führt dazu, dass die Mobilstation MS die oben beschriebene Sequenz wiederholt und somit sofort eine neue Positonsaktualisierungsanfrage ("Tracking Area Update Request") an die Basisstation BS sendet. Ein beliebig langer Silent Call ist somit möglich.

Wie anhand von Fig. 2 beschrieben, ist es auch bei einer Mobilstation nach LTE-Standard möglich, auf die Authentisierungs-Sequenz zu verzichten und lediglich mit der Positionsaktualisierungs-Sequenz zu arbeiten. In diesem Fall folgt auf die Positionsaktualisierungsanfrage 40 direkt die Positionsaktualisierungsablehnung 42.

Wie bereits anhand von Fig. 2 und 3 beschrieben, können auch hier zur Feststellung der Identität der Mobilstation MS zusätzliche Identitätsanfragen 41, 46, 49 eingefügt werden. Auch diese können der Aufrechterhaltung eines möglichst konstanten Sendepegels dienen

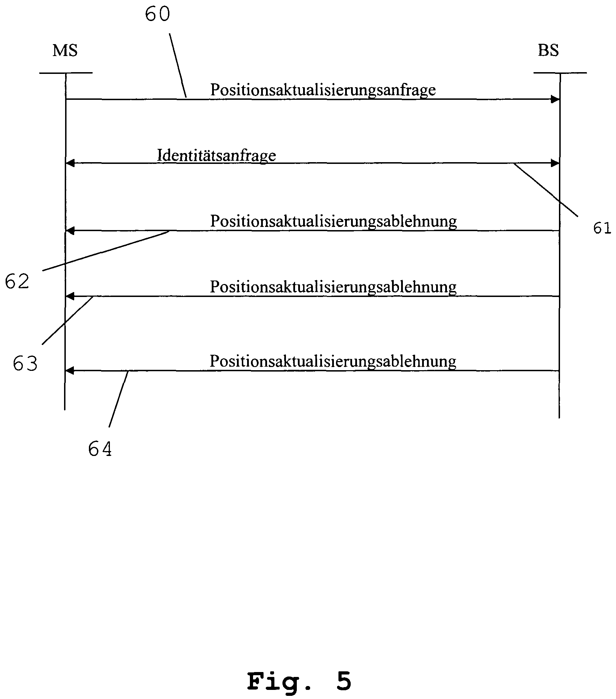

In Fig. 5 wird ein weiterer möglicher Signalisierungsablauf dargestellt. Dieser entspricht zum Teil dem in Fig. 2 gezeigten Ablauf. Auch hier wird der Ablauf an beispielhaften UMTS-Nachrichten veranschaulicht. Die Mobilstation MS sendet eine Positionsaktualisierungsanfrage 60 (Location-Update-Request) an die Basisstation BS. Dies geschieht im Rahmen einer Positionsaktualisierungs-Prozedur.

Die Basisstation BS antwortet mit einer Positionsaktualisierungsablehnung 62 (Location-Update-Reject) mit einem Grund welcher ein Rücksetzen des Versuchszählers (Attempt Counter) bewirkt (z.B. Cause 12 oder Cause 13 nach UMTS-Standard) und weiterhin die Mobilstation MS dazu veranlasst in den Zustand MM-IDLE zu wechseln und davon ausgehend anzustreben, eine neue PLMN-Suche durchzuführen. Dies wird jedoch dadurch verhindert, dass noch bevor die Mobilstation MS mit der neuen PLMN-Suche beginnt eine erneute Positionsaktualisierungsablehnung 63 (Location-Update-Reject) an die Mobilstation gesendet wird. Für diese Nachrichtkönnen verschiedene Gründe (z.B. Cause 22) eingesetzt werden. Hierdurch wird die Mobilstation in ihrem gegenwärtigen Zustand gehalten.

Es werden nun weitere Positionsaktualisierungsablehnungen 64 (Location-Update-Reject), welche den Nachricht 63 entsprechen an die Mobilstation MS gesendet, bis diese eine neue Positionsaktualisierungsprozedur startet und hierzu eine erneute Positionsaktualisierungsanfrage (Location-Update-Request) an die Basisstation BS sendet. Der zuvor beschriebene Ablauf kann nun beliebig oft wiederholt werden, da der Versuchszähler bei jedem Durchlauf zurückgesetzt wird.

Im Gegensatz zu Fig. 2 ist es hier nicht notwendig auf die Positionsaktualisierungsanfragen der Mobilstation MS möglichst spät zu antworten um den Silent Call möglichst auszudehnen. Stattdessen kann der Silent Call durch beliebige Wiederholung dieses Ablaufs verlängert werden.

Durch Einfügen einer Identitätsanfrage 61 nach der Positionsaktualisierungsanfrage 60 wird auch hier die Identität der verbundenen Mobilstation MS ermittelt und darüber hinaus die Mobilstation MS dazu veranlasst, dauerhaft zu senden.

Auch die in Fig. 5 gezeigte Signalisierungsabfolge arbeitet nicht zuverlässig bei sämtlichen verfügbaren Chipsätzen. Es kann somit die Zuverlässigkeit erhöhen, wenn die Signalisierungsabfolge im Rahmen dieser Erfindung in Abhängigkeit des Chipsatzes gewählt wird.

Die Erfindung ist nicht auf das dargestellte Ausführungsbeispiel beschränkt. Auch von UMTS und LTE abweichende Kommunikationsstandards können eingesetzt werden. Alle vorstehend beschriebenen Merkmale oder in den Figuren gezeigten Merkmale sind im Rahmen der Erfindung beliebig vorteilhaft miteinander Kombinierbar. Beispielsweise können in Fig. 1 die Sendeeinheit und die Empfangseinheit 12 auch Bestandteil einer Test-Basisstation bzw. eines Test-Mobilfunks sein und mit getrennten Antennen arbeiten.

## Patentansprüche

1. Verfahren zum Anregen einer Mobilstation (MS) zum wiederholten Senden von Nachrichten an eine Basisstation (BS) in einem öffentlichen Mobilfunknetz
wobei bei einem für den Benutzer der MS nicht bemerkbaren Anruf eine RRC-Verbindung zwischen der MS und der BS aufgebaut wird;
wobei nach Initiierung der RRC-Verbindung und dem Senden einer Positionsaktualisierungsanfrage (20, 30, 40, 60) von der Mobilstation (MS) an die BS, der Abbau der RRC-Verbindung möglichst lange verzögert wird, indem bevor mit dem Aussenden einer Positionsaktualisierungsablehnung (22, 32, 42, 62) oder einer Positionsaktualisierungsannahme (22, 32, 42) durch die Basisstation (BS) geantwortet wird, wiederholt Authentisierungsanfragen (45, 47) von der BS an die MS gesendet werden,
wobei, von der Basisstation die Gerätekennung (IMEI) der Mobilstation abgerufen wird,
und aus der Gerätekennung (IMEI) der Mobilstation (MS) der Gerätetyp der Mobilstation (MS) mittels einer Datenbank ermittelt wird, und
wobei die Anzahl der Wiederholungen in Abhängigkeit vom Gerätetyp bestimmt wird.

2. Verfahren nach Anspruch 1,
**dadurch gekennzeichnet,**
**dass** vor Ablauf einer ersten Zeitspanne (2, 5) durch die Basisstation (BS) eine zweite Positionsaktualisierungsablehnung (23, 33) oder eine zweite Positionsaktualisierungsannahme (23, 33, 43) übertragen wird.

3. Verfahren nach Anspruch 1 oder 2,
**dadurch gekennzeichnet,**
**dass** nach einer Positionsaktualisierungsanfrage (20, 30, 40) der Mobilstation (MS) vor Ablauf einer zweiten Zeitspanne (3, 6) mit dem Aussenden einer Authentisierungsanfrage (35, 45) geantwortet wird.

4. Verfahren nach Anspruch 3,
**dadurch gekennzeichnet,**
**dass** nach Empfang einer Authentisierungsablehnung (50) als Antwort auf die Authentisierungsanfrage (45) vor Ablauf einer dritten Zeitspanne (7) erneut eine Authentisierungsanfrage (47) durch die Basisstation (BS) ausgesendet wird.

5. Verfahren nach Anspruch 3 oder 4,
**dadurch gekennzeichnet,**
**dass** nach Empfang einer Authentisierungsablehnung (36, 48) als Antwort auf die letzte ausgesandte Authentisierungsanfrage (35, 47) vor Ablauf einer vierten Zeitspanne (4, 8) mit dem Aussenden der ersten Positionsaktualisierungsablehnung (32, 42) oder der ersten Positionsaktualisierungsannahme (32, 42) durch die Basisstation (BS) geantwortet wird.

6. Verfahren nach einem der Ansprüche 1 bis 5,
**dadurch gekennzeichnet,**
**dass** nach Empfang einer Positionsaktualisierungsanfrage (20, 30, 40) und Aussenden der ersten Positionsaktualisierungsablehnung (22, 32, 42) oder der ersten Positionsaktualisierungsannahme (22, 32, 42) durch die Basisstation (BS) höchsten zwei weitere Positionsaktualisierungsanfragen und höchstens zwei weitere Positionsaktualisierungsablehnungen oder Positionsaktualisierungsannahmen ausgesendet werden.

7. Verfahren nach einem der Ansprüche 1 bis 6,
**dadurch gekennzeichnet,**
**dass** durch Senden von Identitätsanfragen (21, 31, 37, 41, 49) durch die Basisstation (BS) die Mobilstation (MS) zu weitgehend andauerndem Senden veranlasst wird.

8. Verfahren nach einem der Ansprüche 1 bis 7,
**dadurch gekennzeichnet,**
**dass** die Mobilstation (MS) und die Basisstation (BS) nach dem UMTS-Standard oder nach dem LTE-Standard arbeiten.

9. Verfahren nach Anspruch 1,
**dadurch gekennzeichnet,**
**dass** nach der Positionsaktualisierungsanfrage (60) der Mobilstation (MS) mit dem Aussenden einer ersten Positionsaktualisierungsablehnung (62) durch die Basisstation (BS) geantwortet wird,
**dass** die erste Positionsaktualisierungsablehnung (62) derart gestaltet ist, dass sie ein Rücksetzen eines Versuchszählers bewirkt, und
**dass** nach dem Aussenden der ersten Positionsaktualisierungsablehnung (62) zumindest eine zweite Positionsaktualisierungsablehnung (63) von der Basisstation (BS) an die Mobilstation (MS) gesendet wird.

10. Anordnung zum Anregen einer Mobilstation (MS) zum wiederholten Senden von Nachrichten an eine Basisstation (BS) in einem öffentlichen Mobilfunknetz,
wobei die Anordnung ausgebildet ist, um bei einem für den Benutzer der MS nicht bemerkbaren Anruf eine RRC-Verbindung zwischen der MS und der BS aufzubauen,
wobei die Anordnung die Basisstation (BS) beinhaltet, wobei die Basisstation (BS) eine Antenne (10), eine Sendeeinheit (11), eine Empfangseinheit (12) und Verarbeitungseinrichtung (13) beinhaltet,
wobei die Verarbeitungseinrichtung (13) derart ausgebildet ist, dass sie empfangene Signale verarbeitet und auszusendende Signale bestimmt,
wobei die Verarbeitungseinrichtung (13) derart ausgebildet ist, dass sie mittels der Sendeeinheit (11) an die Mobilstation (MS) sendet,
wobei die Verarbeitungseinrichtung (13) weiterhin über eine Positionsaktualisierungseinheit (14) verfügt, welche dazu ausgebildet ist, nach Initiierung der RRC-Verbindung und dem Senden einer Positionsaktualisierungsanfrage (20, 30, 40) von der Mobilstation (MS) an die BS, den Abbau der RRC-Verbindung möglichst lange zu verzögern, indem bevor die Sendeeinheit (11) dazu veranlasst wird mit dem Aussenden einer ersten Positionsaktualisierungsablehnung (22, 32, 42) oder einer ersten
Positionsaktualisierungsannahme (22, 32, 42) zu antworten, sie dazu veranlasst wird, wiederholt Authentisierungsanfragen (45, 47) von der BS an die MS zu senden,
wobei die Verarbeitungseinrichtung (13) weiterhin über eine Datenbank (17) verfügt,
wobei die Datenbank (17) eine Vielzahl von Gerätekennungen (IMEI) und entsprechenden Chipsätzen bereit hält,
wobei die Verarbeitungseinrichtung (13) eine Gerätekennung (IMEI) der Mobilstation (MS) ermittelt,
dass die Verarbeitungseinrichtung (13) einen Gerätetyp der Mobilstation (MS) basierend auf der Gerätekennung (IMEI) ermittelt, und
wobei die Verarbeitungseinrichtung (13) anhand des Gerätetyps (IMEI) eine Anzahl von Wiederholungen auswählt.

11. Anordnung nach Anspruch 10,
**dadurch gekennzeichnet,**
**dass** die Verarbeitungseinrichtung (13) weiterhin über eine Authentisierungseinheit (15) verfügt,
**dass** die Authentisierungseinheit (15) derart ausgebildet ist, dass sie mittels der Sendeeinheit (11) nach einer Positionsaktualisierungsanfrage (20, 30, 40) der Mobilstation (MS) vor Ablauf einer zweiten Zeitspanne (3, 6) mit dem Aussenden einer Authentisierungsanfrage (35, 45) antwortet.

12. Anordnung nach Anspruch 10 oder 11,
**dadurch gekennzeichnet,**
**dass** die Verarbeitungseinrichtung (13) weiterhin über eine Identitätsfeststellungseinheit (16) verfügt, und
**dass** die Identitätsfeststellungseinheit (16) mittels der Sendeeinheit (11) durch Senden von Identitätsanfragen (21, 31, 37, 41, 49) die Mobilstation (MS) zur weitgehenden Aufrechterhaltung eines Sendepegels veranlasst.

## Claims

1. A method for the excitation of a mobile station (MS) for repeated transmission of messages to a base station (BS) in a public mobile-telephone network
wherein, in the case of a call not noticeable by the user of the MS, an RRC connection is established between the MS and the BS;
wherein, after initialisation of the RRC connection and transmission of a position-update request (20, 30, 40, 60) from the mobile station (MS) to the BS, the disconnection of the RRC connection is delayed as long as possible, in that, before a response is given by the base station (BS) with the transmission of a position-update rejection (22, 32, 42, 62) or a position-update acceptance (22, 32, 42), authentication requests (45, 47) are transmitted repeatedly from the BS to the MS;
wherein the device identity (IMEI) of the mobile station is retrieved by the base station,
and the device type of the mobile station (MS) is determined from the device identity (IMEI) of the mobile station (MS) by means of a databank; and
wherein the number of repetitions is determined dependent upon the device type.

2. The method according to claim 1,
**characterised in that**,
before the expiry of the first time interval (2, 5), a second position-update rejection (23, 33) or a second position-update acceptance (23, 33, 43) is transmitted by the base station (BS) .

3. The method according to claim 1 or 2,
**characterised in that**,
after a position-update request (20, 30, 40) of the mobile station (MS) before the expiry of a second time interval (3, 6), a response is issued with the transmission of an authentication request (35, 45).

4. The method according to claim 3,
**characterised in that**,
after the reception of an authentication rejection (50), as a response to the authentication request (45) before the expiry of a third time interval (7), an authentication request (47) is again transmitted by the base station (BS).

5. The method according to claim 3 or 4,
**characterised in that**,
after the reception of an authentication rejection (36, 48), as a response to the last transmitted authentication request (35, 47) before the expiry of a fourth time interval (4, 8), a response is issued by the base station (BS) with the transmission of the first position-update rejection (32, 42) or the first position-update acceptance (32, 42).

6. The method according to one of claims 1 to 5,
**characterised in that**,
after the reception of a position-update request (20, 30, 40) and the transmission of the first position-update rejection (22, 32, 42) or of the first position-update acceptance (22, 32, 42), a maximum of two further position-update requests and a maximum of two further position-update rejections or position-update acceptances are transmitted by the base station (BS).

7. The method according to one of claims 1 to 6,
**characterised in that**,
through the transmission of identity requests (21, 31, 37, 41, 49) by the base station (BS), the mobile station (MS) is caused to transmit largely continuously.

8. The method according to one of claims 1 to 7,
**characterised in that**,
the mobile station (MS) and the base station (BS) operate according to the UMTS standard or the LTE standard.

9. The method according to claim 1,
**characterised in that**,
after the position-update request (60) of the mobile station (MS), a response is issued by the base station (BS) with the transmission of a first position-update rejection (62),
that the first position-update rejection (62) is formed in such a manner that it causes a reset of an attempt counter, and
that after the transmission of the first position-update rejection (62), at least one second position-update rejection (63) is transmitted from the base station (BS) to the mobile station (MS).

10. An arrangement for the excitation of a mobile station (MS) for the repeated transmission of messages to a base station (BS) in a public mobile-telephone network,
wherein the arrangement is embodied, in the case of a call not noticeable by the user of the MS, to set up an RRC connection between the MS and the BS;
wherein the arrangement contains the base station (BS); wherein the base station (BS) contains an antenna (10), a transmitting unit (11), a receiving unit (12) and a processing device (13),
wherein the processing device (13) is embodied in such a manner that it processes the received signals and determines signals to be transmitted;
wherein the processing device (13) is embodied in such a manner that it transmits to the mobile station (MS) by means of the transmitting unit (11);
wherein the processing device (13) further comprises a position-update unit (14), which is embodied, after the initialisation of the RRC connection and the transmission of a position-update request (20, 30, 40) from the mobile station (MS) to the BS, to delay the disconnection of the RRC connection as long as possible, in that, before the transmitting unit (11) is caused to respond with the transmission of a first position-update rejection (22, 32, 42) or a first position-update acceptance (22, 32, 42), it is caused to transmit authentication requests (45, 47) repeatedly from the BS to the MS;
wherein the processing device (13) further comprises a databank (17);
wherein the databank (17) keeps ready a plurality of device identities (IMEI) and corresponding chip sets;
wherein the processing device (13) determines a device identity (IMEI) of the mobile station (MS),
that the processing device (13) determines a device type of the mobile station (MS) based on the device identity (IMEI); and
wherein the processing device (13) selects a number of repetitions based on the device type (IMEI).

11. The arrangement according to claim 10,
**characterised in that**,
the processing device (13) further comprises an authentication unit (15),
that the authentication unit (15) is embodied in such a manner that, by means of the transmitting unit (11), after a position-update request (20, 30, 40) of the mobile station (MS) before the expiry of a second time interval (3, 6), it responds with the transmission of an authentication request (35, 45).

12. The arrangement according to claim 10 or 11,
**characterised in that**,
the processing device (13) further comprises an identity-determining unit (16), and
that the identity-determining unit (16) causes the mobile station (MS) to maintain extensively a transmission level, by transmitting identity requests (21, 31, 37, 41, 49) by means of the transmitting unit (11).

## Revendications

1. Procédé d'activation d'une station mobile (MS) pour l'émission répétée de messages vers une station de base (BS) dans un réseau public mobile,
où une liaison RRC est établie entre la MS et la BS en cas d'appel non perceptible pour l'utilisateur de la MS ;
où, après initialisation de la liaison RRC et émission d'une demande d'actualisation de position (20, 30, 40, 60) de la station mobile (MS) vers la BS, la coupure de la liaison RRC est retardée le plus longtemps possible, en adressant de manière répétée des demandes d'authentification (45, 47) de la BS à la MS avant qu'il soit répondu par l'envoi d'un refus d'actualisation de position (22, 32, 42, 62) ou d'une acceptation d'actualisation de position (22, 32, 42) par la station de base (BS),
où l'identifiant (IMEI) de la station mobile est appelé par la station de base,
et où le type d'appareil de la station mobile (MS) est déterminé au moyen d'une base de données à partir de l'identifiant (IMEI) de la station mobile (MS), et
où le nombre de répétitions est déterminé en fonction du type d'appareil.

2. Procédé selon la revendication 1,
**caractérisé**
**en ce que** un deuxième refus d'actualisation de position (23, 33) ou une deuxième acceptation d'actualisation de position (23, 33, 43) sont transmis par la station de base (BS) avant l'expiration d'un premier délai (2, 5).

3. Procédé selon la revendication 1 ou 2,
**caractérisé**
**en ce qu'**après une demande d'actualisation de position (20, 30, 40) de la station mobile (MS), il est répondu par l'envoi d'une demande d'authentification (35, 45) avant l'expiration d'un deuxième délai (3, 6).

4. Procédé selon la revendication 3,
**caractérisé**
**en ce qu'**après réception d'un rejet d'authentification (50) en tant que réponse à la demande d'authentification (45), une demande d'authentification (47) est à nouveau adressée par la station de base (BS) avant l'expiration d'un troisième délai (7).

5. Procédé selon la revendication 3 ou 4,
**caractérisé**
**en ce qu'**après réception d'un rejet d'authentification (36, 48) en tant que réponse à la dernière demande d'authentification (35, 47) adressée, il est répondu par l'envoi du premier refus d'actualisation de position (32, 42) ou de la première acceptation d'actualisation de position (32, 42) par la station de base (BS) avant l'expiration d'un quatrième délai (4, 8).

6. Procédé selon l'une des revendications 1 à 5,
**caractérisé**
**en ce qu'**après réception d'une demande d'actualisation de position (20, 30, 40) et envoi du premier refus d'actualisation de position (22, 32, 42) ou de la première acceptation d'actualisation de position (22, 32, 42) par la station de base (BS), au maximum deux autres demandes d'actualisation de position et au maximum deux autres refus d'actualisation de position ou acceptations d'actualisation de position sont adressés.

7. Procédé selon l'une des revendications 1 à 6,
**caractérisé**
**en ce que** la station mobile (MS) est induite à une émission sensiblement constante par envoi de demandes d'identité (21, 31, 37, 41, 49) par la station de base (BS).

8. Procédé selon l'une des revendications 1 à 7,
**caractérisé**
**en ce que** la station mobile (MS) et la station de base (BS) fonctionnent conformément à la norme UMTS ou à la norme LTE.

9. Procédé selon la revendication 1,
**caractérisé**
**en ce qu'**après la demande d'actualisation de position (60) de la station mobile (MS), il est répondu par l'envoi d'un premier refus d'actualisation de position (62) par la station de base (BS),
**en ce que** le premier refus d'actualisation de position (62) est configuré de manière à provoquer une réinitialisation d'un compteur d'essais, et
**en ce qu'**après l'envoi du premier refus d'actualisation de position (62), au moins un deuxième refus d'actualisation de position (63) est adressé par la station de base (BS) à la station mobile (MS).

10. Dispositif pour l'activation d'une station mobile (MS) pour l'émission répétée de messages vers une station de base (BS) dans un réseau public mobile,
où ledit dispositif est prévu pour établir une liaison RRC entre la MS et la BS en cas d'appel non perceptible pour l'utilisateur de la MS,
où ledit dispositif comprend la station de base (BS),
où la station de base (BS) comprend une antenne (10), une unité d'émission (11), une unité de réception (12) et un dispositif de traitement (13),
où le dispositif de traitement (13) est configuré de manière à traiter des signaux reçus et à déterminer des signaux à émettre,
où le dispositif de traitement (13) est configuré de manière à émettre vers la station mobile (MS) au moyen de l'unité d'émission (11),
où le dispositif de traitement (13) dispose en outre d'une unité d'actualisation de position (14) configurée pour retarder le plus longtemps possible la coupure de la liaison RRC après l'initialisation de la liaison RRC et l'émission d'une demande d'actualisation de position (20, 30, 40) de la station mobile (MS) vers la BS, en la forçant à adresser de manière répétée des demandes d'authentification (45, 47) de la BS à la MS avant que l'unité d'émission (11) soit induite à répondre par l'envoi d'un premier refus d'actualisation de position (22, 32, 42,) ou d'une première acceptation d'actualisation de position (22, 32, 42),
où le dispositif de traitement (13) dispose en outre d'une base de données (17),
où la base de données (17) met à disposition une pluralité d'identifiants (IMEI) et de chipsets correspondants,
où le dispositif de traitement (13) détermine un identifiant (IMEI) de la station mobile (MS),
où le dispositif de traitement (13) détermine un type d'appareil de la station mobile (MS) sur la base de l'identifiant (IMEI), et
où le dispositif de traitement (13) sélectionne un nombre de répétitions sur la base du type d'appareil (IMEI).

11. Dispositif selon la revendication 10,
**caractérisé**
**en ce que** le dispositif de traitement (13) dispose en outre d'une unité d'authentification (15),
**en ce que** l'unité d'authentification (15) est configurée de manière à répondre au moyen de l'unité d'émission (11) par l'envoi d'une demande d'authentification (35, 45) après une demande d'actualisation de position (20, 30, 40) de la station mobile (MS) avant l'expiration d'un deuxième délai (3, 6).

12. Dispositif selon la revendication 10 ou 11,
**caractérisé**
**en ce que** le dispositif de traitement (13) dispose en outre d'une unité de constatation d'identité (16), et
**en ce que** l'unité de constatation d'identité (16) est configurée de manière à induire la station mobile (MS) au maintien d'un niveau d'émission constant au moyen de l'unité d'émission (11) par l'envoi de demandes d'identité (21, 31, 37, 41, 49).
